# EUROPÄISCHE PATENTSCHRIFT

(11) **EP 3 254 120 B1**
(45) Veröffentlichungstag und Bekanntmachung des Hinweises auf die Patenterteilung: **05.05.2021**
(21) Anmeldenummer: 16703431.3
(22) Anmeldetag: 02.02.2016
(51) Int. Cl.: G01P 3/66

(54) **HOHLLEITERANORDNUNG ZUR MESSUNG DER GESCHWINDIGKEIT EINES PROJEKTILS WÄHREND DES DURCHLAUFES EINER WAFFENROHRANORDNUNG**
WAVEGUIDE ARRANGEMENT FOR MEASURING THE SPEED OF A PROJECTILE DURING PASSAGE THROUGH A WEAPON BARREL ARRANGEMENT
ENSEMBLE DE GUIDES CREUX POUR MESURER LA VITESSE D'UN PROJECTILE PENDANT LE PASSAGE À TRAVERS UN ENSEMBLE FORMANT CANON

(30) Priorität: 06.02.2015 DE 102015001413
(43) Veröffentlichungstag der Anmeldung: 13.12.2017
(73) Patentinhaber: Rheinmetall Air Defence AG, 8050 Zürich (CH)
(72) Erfinder: FRICK, Henry Roger, 8442 Hettlingen (CH)
(74) Vertreter: Hübsch, Dirk
(86) Internationale Anmeldenummer: PCT/EP2016/000161
(87) Internationale Veröffentlichungsnummer: WO 2016/124325

(56) Entgegenhaltungen:
- DE-A1-102006 058 375
- DE-A1-102008 024 574
- US-A- 4 283 989

## Beschreibung

Die Erfindung betrifft eine Hohlleiteranordnung zur Messung der Geschwindigkeit eines Projektils während des Durchlaufes einer Waffenrohranordnung, mit den Merkmalen des Patentanspruches 1.

Das Projektil wird aus einer Rohrwaffe abgefeuert. Die Rohrwaffe weist eine entsprechende Waffenrohranordnung auf. Wenn Munition mit Luftsprengpunkt verwendet wird, ist eine möglichst präzise Kenntnis der Mündungsgeschwindigkeit wünschenswert, um den Ort des Luftsprengpunktes möglichst präzise bestimmen zu können. Munition mit Luftsprengpunkt wird beispielsweise in Mittelkalibergeschützen eingesetzt. Auch wenn Munition ohne Luftsprengpunkt verwendet wird, ist die Kenntnis der Mündungsgeschwindigkeit für die Prognose der Flugbahn und den Aufschlagpunkt wesentlich. Munition ohne Luftsprengpunkt wird beispielsweise in Haubitzen eingesetzt, wobei die Haubitzen beispielsweise ein Kaliber von 155 mm aufweisen können.

Im Stand der Technik sind unterschiedliche Verfahren und Vorrichtungen zur Messung der Geschwindigkeit eines Projektils bekannt.

Aus der US 3,918,061 ist bekannt, die Geschwindigkeit eines großkalibrigen Artillerieprojektils mittels Radar zu messen. Dabei wird das Projektil nach Verlassen der Mündung einer entsprechenden Waffenrohranordnung mittels Radar beleuchtet. Ein Teil des Radarsignals wird zurück an eine Radareinrichtung reflektiert. Durch Zählen der vom Projektil erzeugten Dopplerschwingung bzw. durch Ermittlung der Dopplerverschiebung des Radarsignals kann ein Maß für die Projektilgeschwindigkeit ermittelt werden. Die Messung der Mündungsgeschwindigkeit für Artilleriegeschosse mittels Radar hat den Nachteil, dass sofern mehrere Haubitzen in räumlicher Nähe nahezu gleichzeitig feuern, das Reflektionssignal eines ersten Projektils die Messung für ein zweites Projektil beeinflussen kann. Ferner ist dabei die Zuordnung eines einzelnen Projektils für einen bestimmten Radarempfänger nicht immer sicher möglich.

Besonders vorteilhaft ist die Messung der Geschwindigkeit des Projektils im Bereich der Mündung der Waffenrohranordnung, insbesondere im Bereich einer Mündungsbremse.

Aus der EP 1 482 311 A1 ist eine Vorrichtung und ein Verfahren zur Ermittlung der Mündungsgeschwindigkeit eines Projektils beim Austritt aus einem Waffenrohr bekannt. Die Vorrichtung umfasst eine Spule, die im Bereich vor dem Austritt um eine Längsachse des Waffenrohrs herum angeordnet ist und eine Versorgungsvorrichtung zum Einprägen eines Stroms in die Spule, um ein Magnetfeld zu erzeugen. Die Vorrichtung umfasst zusätzlich eine Auswertevorrichtung, die einen Spannungspuls an der Spule abgreift, wobei der Spannungspuls beim Durchtritt des Projektils durch das Magnetfeld der Spule induziert wird. Es werden zwei vorgegebene Punkte des Spannungspulses erfasst, das Zeitintervall zwischen den zwei Punkten wird ermittelt und aus dem Zeitintervall wird die Mündungsgeschwindigkeit des Projektils berechnet.

Ferner ist bekannt, die Geschwindigkeit des Projektils im Bereich der Mündungsbremse mittels eines Feldes innerhalb eines Hohlleiters mittels einer Hohlleiteranordnung zu messen. Der Hohlleiter wird dabei unterhalb seiner Grenzfrequenz betrieben. Das dabei eingesetzte Feld ist im Hohlleiter stark konzentriert und tritt daher nur wenig aus dem Hohlleiter aus.

Aus der DE 10 2008 024 574 A1 ist eine Hohlleiteranordnung zur Messung der Geschwindigkeit eines Projektils während des Durchlaufes einer Waffenrohranordnung bekannt, wobei als Hohlleiter hier ein glattes Rohr verwendet wird. Es sind dabei ein Sendekoppler und ein Empfangskoppler vorgesehen, wobei der Sendekoppler und der Empfangskoppler in den Hohlleiter eingebunden sind.

Aus der gattungsbildenden DE 10 2006 058 375 A1 ist eine Hohlleiteranordnung zur Messung der Mündungsgeschwindigkeit bekannt. Hierbei wird ein Waffenrohr und/oder Teile einer Mündungsbremse als Hohlleiter genutzt. Der Hohlleiter weist dabei einen Haupthohlleiter mit einem kreisförmigen Querschnitt auf. Das Projektil durchläuft den Haupthohlleiter. Die gesamte Hohlleiteranordnung weist dabei einen nicht exakt kreisförmigen Querschnitt auf, sondern weist eine derartige Profilierung auf, dass eine Vielzahl von Nebenhohlleitern durch eine Rippenstruktur an der Hohlleiterwand ausgebildet sind. Diese Rippenstruktur dient dazu, dass ein bestimmter Hohlleitermode angeregt wird. Die Rippenstruktur begrenzt zwölf sich in Längsrichtung erstreckende Zwischenräume, wobei diese Zwischenräume jeweils einen Nebenhohlleiter bilden. Die Nebenhohlleiter erstrecken sich benachbart zum Haupthohlleiter und sind mit dem Haupthohlleiter über entsprechende schlitzförmige Öffnungen verbunden. In einigen der Nebenhohlleiter sind Koppler angeordnet, in den verbleibenden Nebenhohlleitern sind keine Koppler angeordnet. Ein Empfangskoppler dient zur Signalaufnahme und ist über ein Kabel für das Empfangssignal mit einer Empfangseinheit verbunden. Ein Sendekoppler dient zur Anregung des entsprechenden Hohlleitermodes. Ein Oszillator regt über den Sendekoppler den Hohlleitermode an. Die Frequenz liegt dabei unterhalb der Grenzfrequenz des Hohlleiters.

Aus der AT 389 764 B ist ein Waffenrohr bekannt, wobei eine elektromagnetische Welle aufgeteilt und über einen Hohlleiterübergang an zwei Stellen am Waffenrohr eingekoppelt und nach Reflexion an dem im Waffenrohr befindlichen Geschoss wieder ausgekoppelt wird. Eine entsprechende Ausbreitung der Welle mit Reflexion erfolgt nur in einem ausgeprägten Hohlleitermode, der bei einer Frequenz oberhalb der Grenzfrequenz des Hohlleiters liegt. Der Hohlleiterübergang bildet zusammen mit den Koppelöffnungen dabei einen Nebenhohlleiter. Die entsprechenden Koppelöffnungen können mittels elektrisch nicht leitender Verschlussstücke mit geringen dielektrischen Verlusten abgeschlossen sein.

Aus der US 4,283,989 ist ein Flugabwehrgeschütz mit einem Waffenrohr bekannt. Das Waffenrohr dient als Haupthohlleiter. In der Nähe der Mündung ist ein Messkopf angeordnet, der mit einem Mikrowellengenerator bzw. Oszillator verbunden ist, um eine elektromagnetische Mode in dem Waffenrohr anzuregen. Der Messkopf dient ferner dazu, ein Dopplerfrequenzsignal zu ermitteln, das zur Ermittlung der Geschwindigkeit des Projektils dient. Der Messkopf ist im Bereich einer Mündungsbremse des Waffenrohrs angeordnet und durchgreift eine sich im Wesentlichen radial erstreckende Bohrung der Mündungsbremse. Der Messkopf weist ein Gehäuse auf, wobei ein Gehäusebereich des Gehäuses außerhalb der Mündungsbremse angeordnet ist und ein innerer Gehäusebereich des Gehäuses in eine Bohrung eingreift. Die rohrförmigen Gehäusebereiche begrenzen eine zylindrische Öffnung. Innerhalb dieser Öffnung ist ein zylindrischer dielektrischer Einsatz angeordnet. Dieser Einsatz besteht aus einem Glaskeramik-Material. Der äußere Gehäusebereich weist eine Öffnung auf, durch die ein Leiter in eine sich in Radialrichtung erstreckende Öffnung des Einsatz eingeschoben ist. Diese Öffnung soll ca. im Abstand einer viertel Wellenlänge von einer äußeren stirnseitigen Fläche entfernt angeordnet sein. Der Einsatz soll dazu dienen, die entsprechenden Wellen durch den Messkopf besser leiten zu können. Ferner ist ein sich entlang des Waffenrohres erstreckender Nebenhohlleiter vorhanden. Der Nebenhohlleiter ist mit einem Dielektrikum gefüllt. Dieser Nebenhohlleiter ist über einen Anschluss und ein Koaxialkabel mit dem Messkopf verbunden. Solange das Projektil sich im Lauf bzw. im Bereich der Mündungsbremse befindet, wird der Oszillator mit einer Frequenz oberhalb der Hohlleiter-Grenzfrequenz betrieben. Die Messung erfolgt somit mit einer Fundamentalmode oberhalb der Grenzfrequenz des Hohlleiters, solange sich das Projektil innerhalb des Laufs befindet. Nach dem Austritt des Projektils aus dem Waffenrohr wird eine Frequenz unterhalb der Grenzfrequenz des Waffenrohrs zur Messung und Wechselwirkung mit dem Projektil verwendet, wobei das Feld vom Geschütz zum Projektil abgestrahlt wird.

Der gattungsbildende Stand der Technik ist noch nicht optimal ausgebildet. Die Messung der Mündungsgeschwindigkeit, insbesondere von Artilleriegeschossen mittels einer entsprechenden Hohlleiteranordnung ist technologisch möglich, jedoch können sich hierdurch material- und montagebedingte Schwierigkeiten ergeben. Die eingesetzten Koppler sind vor der Einwirkung der Verbrennungsgase zu schützen. Ferner ist die Hohlleiteranordnung entsprechend schockbelastbar auszugestalten. Zudem hat das Abstrahlen des Signals den Nachteil, dass das Geschütz leichter von gegenerischen Truppen entdeckt werden kann.

Der Erfindung liegt daher die Aufgabe zugrunde, die eingangs genannte Hohlleiteranordnung derart auszugestalten und weiterzubilden, so dass eine verbesserte Hohlleiteranordnung, insbesondere für großkalibrige Geschütze, bereitgestellt ist.

Diese der Erfindung zugrunde liegende Aufgabe wird nun durch eine Hohlleiteranordnung mit den Merkmalen des Patentanspruches 1 gelöst. In dem Nebenhohlleiter ist ein Isolator aus einem Isolatormaterial angeordnet, wobei der mindestens eine Koppler sich zumindest teilweise in dem Isolatormaterial erstreckt. Dies hat den Vorteil, dass die Koppler, insbesondere mindestens ein Empfangskoppler und mindestens ein Sendekoppler, auf einfache und kostengünstige Weise vor den Verbrennungsgasen geschützt sind. Dadurch, dass keine Ringe oder dergleichen aus dem Isolator hergestellt werden müssen, ist nur ein verhältnismäßig geringer Materialbedarf zur Herstellung des Isolators notwendig. In dem Nebenholleiter können jeweils ein oder mehrere Isolatoren angeordnet sein. In bevorzugter Ausgestaltung ist in jedem Nebenhohlleiter ein Isolator angeordnet.

Die Geschwindigkeit des im Haupthohlleiter befindlichen Projektils wird mit einer Frequenz unterhalb der Grenzfrequenz gemessen. Das Signal wird mit einer Frequenz unterhalb einer Grenzfrequenz erzeugt, während das Projektil sich noch im Waffenrohr, nämlich im Haupthohlleiter befindet. Der Sendekoppler ist dabei derart beabstandet zu der Mündung angeordnet, so dass das Feld nicht aus dem Waffenrohr austritt. Dies hat den Vorteil, dass kein Feld nach außen in die Umgebung des Geschützes abgestrahlt wird, und so das Feld ausschließlich im Hohlleiter konzentriert ist. Bei der Messung der Geschwindigkeit ist daher die Gefahr vermindert, dass das Geschütz durch ein austretendes Feld von gegnerischen Truppen entdeckt und lokalisiert wird. Das erzeugte Feld fällt im Waffenrohr exponentiell ab. Der Abstand des Sendekoppler und Empfangskopplers ist daher in Längsrichtung klein, um einen entsprechenden Signalpegelunterschied messen zu können.

Um einen höheren Empfangssignalpegel zu erreichen, können mehrere Nebenhohlleiter mit entsprechenden Empfangskopplern vorgesehen sein. In einer Ausgestaltung ist genau ein Nebenhohlleiter vorgesehen. In besonders bevorzugter Ausgestaltung sind nun vier Nebenhohlleiter oder weniger als vier Nebenhohlleiter vorgesehen. Dies reduziert den Materialbedarf für den Isolator. Wenn mehrere Nebenhohlleiter vorgesehen sind, sind die Nebenhohlleiter vorzugsweise gleichmäßig voneinander in Umfangsrichtung beabstandet, um eine möglichst gleichmäßige Massenverteilung zu erreichen. Im Fall von vier Nebenhohlleitern sind diese vorzugsweise um 90° Grad zueinander beabstandet. Im Fall von drei Nebenhohlleitern sind diese vorzugsweise um 120° Grad zueinander beabstandet. Im Fall von zwei Nebenhohlleitern sind diese vorzugsweise um 180° Grad zueinander beabstandet. In jedem Nebenhohlleiter ist insbesondere mindestens ein Koppler angeordnet. Insbesondere ist in den entsprechenden Nebenhohlleitern jeweils mindestens ein Sendekoppler und mindestens ein Empfangskoppler angeordnet. Das Isolatormaterial weist vorzugsweise einen keramischen Werkstoff auf. Das Isolatormaterial ist durch ein oder mehrere Werkstücke gebildet.

Das Isolatormaterial ist vorzugsweise formschlüssig im Nebenhohlleiter angeordnet. Der Querschnitt des Isolatormaterials ist an den Querschnitt des Nebenhohlleiters angepasst. Vorzugsweise füllt das Isolatormaterial den Nebenhohlleiter zum Großteil, vorzugsweise vollständig aus. Der Querschnitt des Nebenhohlleiters kann sich insbesondere konisch nach radial außen erweitern, so dass das Isolatormaterial mit seinen passend konisch verlaufenden Seitenwänden formschlüssig in dem Nebenhohlleiter gehalten ist.

Die erfindungsgemäße Hohlleiteranordnung sieht vor, dass in einem Haupthohlleiter das Projektil geführt wird. Der Haupthohlleiter hat eine Innenquerabmessung, die im Wesentlichen dem Durchmesser des Projektils entspricht. Dies ist die bevorzugte Maßnahme, die Querabmessung des Haupthohlleiters so klein wie möglich zu halten und sie auf die Einbaugröße der Hohlleiteranordnung zu minimieren. Der Haupthohlleiter ist an das Kaliber der Waffenrohranordnung angepasst. Der Haupthohlleiter kann insbesondere einen wesentlichen kreisförmigen Querschnitt aufweisen. Der Haupthohlleiter führt das Projektil. Die Hohlleiteranordnung ist insbesondere für großkalibrige Artilleriegeschütze geeignet. Der Haupthohlleiter weist vorzugsweise einen derartigen Durchmesser auf, dass Projektile mit einem Kaliber von 70 mm oder von mehr als 70 mm den Haupthohlleiter durchlaufen können. Der Haupthohlleiter weist vorzugsweise einen Durchmesser zur Aufnahme von Projektilen mit dem Kaliber 155 mm auf. Der Durchmesser des Haupthohlleiters beträgt insbesondere mehr als 150 mm, vzw. im Wesentlichen 155 mm.

Insbesondere wenn nur beispielsweise ein oder zwei Nebenhohlleiter vorgesehen sind, kann auch für solch große Kaliber eine einfache und kostengünstig herzustellende Hohlleiteranordnung bereitgestellt werden. Die Fertigung und Handhabung der entsprechenden Isolatoren bzw. Isolatormaterialbauteilen ist kostengünstig. Ferner ist es vorteilhaft, dass bei der Herstellung von entsprechend kleineren Isolatoren die Gefahr verringert ist, dass Fehlstellen im Isolator bei der keramischen Herstellung auftreten können. Dies könnte die Festigkeit herabsetzen. Daher hat die hier vorgeschlagene Hohlleiteranordnung den Vorteil, dass die Festigkeit des Isolators verbessert ist.

Der mindestens eine Nebenhohlleiter verläuft parallel zum Haupthohlleiter. Die Querabmessungen des Nebenhohlleiters können in gewissem Maße frei gewählt werden, sollten aber bevorzugt viel kleiner als jene des Haupthohlleiters sein, um die Einbaugröße der Hohlleiteranordnung nicht unnötig zu vergrößern und zudem die Größe der Isolatoren klein zu halten. Der Haupthohlleiter und der Nebenhohlleiter sind direkt nebeneinander liegend und angrenzend aneinander angeordnet bzw. ausgebildet und besitzen eine gemeinsame Öffnung, welche auf ihrer gesamten Länge die beiden Hohlleiter verbindet. Somit kommunizieren der Haupthohlleiter und der Nebenhohlleiter durch das elektromagnetische Feld, welches im Nebenhohlleiter erzeugt wird, miteinander. Der Nebenhohlleiter ist vorzugsweise mit dem Isolator ausgefüllt und beinhaltet den Sendekoppler und den Empfangskoppler. Mit dieser Maßnahme kann die Baugröße und die Menge des notwendigen Materials zur Herstellung des Isolators minimiert werden.

Die Anzahl und Anordnung der Nebenhohlleiter ist nicht im Hinblick auf eine Modenselektion gewählt. Die Nebenhohlleiter können gleichförmig oder ungleichmäßig beabstandet sein. Die Anordnung der Nebenhohlleiter ist von der Signalqualität und von der Baugröße bestimmt. Es sind mehrere Hohlleitermoden zugelassen. Die Messung ist nicht davon abhängig, dass nur ein Hohlleitermode angeregt wird. Es wird mit dem Empfangskoppler das Signal gemessen und anhand der Änderung des Signals bzw. des zeitlichen Verlaufs wird die Geschwindigkeit gemessen.

Der Einbau der entsprechenden Koppler in den Isolator ist kostengünstig und einfach. Der Koppler ist als ein Koaxialleiter mit einem Innenleiter und einem Außenleiter ausgebildet. Der Außenleiter ist mit dem Nebenhohlleiter leitend verbunden. Der Außenleiter ist dabei von außen an den Nebenhohlleiter angeschlossen. Dies ist eine einfache und kostengünstige Methode. Der Innenleiter wird vorzugsweise in eine Bohrung bzw. in einen Kanal im Isolator geführt. Dies ist eine besonders einfache und kostengünstige Anordnung und Montage des Sendekopplers bzw. des Empfangskopplers. Der Sende- und Empfangskoppler weisen hier eine Koaxialleitung auf, von der jeweils der freigelegte Innenleiter von außen in eine vorgesehene Bohrung des Isolators geschoben wird. Der Innenleiter ist an dem Nebenhohlleiter befestigt. Damit entfällt der aufwendige Einbau der Koppler in den Isolator. Durch diese Ausbildung der Koppler ist eine hohe Störfestigkeit gegenüber äußeren Feldern erreicht. Die Hohlleiteranordnung ist abgeschirmt. Ferner ist es vorteilhaft, dass keine Emissionen nach außen gelangen, da das elektromagnetische Feld im Innern konzentriert ist. Fremde Aufklärungssysteme können so die Anwesenheit der Hohlleiteranordnung nicht detektieren.

Die eingangs genannten Nachteile sind daher vermieden und entsprechende Vorteile sind erzielt.

Es gibt nun eine Vielzahl von Möglichkeiten, die erfindungsgemäße Hohlleiteranordnung in vorteilhafter Art und Weise auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert.

In der Zeichnung zeigt:
- Fig. 1a: in einer quer geschnittenen, schematischen Darstellung eine Hohlleiteranordnung geeignet zur Messung der Geschwindigkeit ohne Projektil,
- Fig. 1b: in einer schematischen, längs geschnittenen Darstellung die Hohlleiteranordnung ohne Projektil,
- Fig. 2a: in einer schematischen, quer geschnittenen Darstellung die Hohlleiteranordnung mit dem Projektil, und
- Fig. 2b: in einer schematischen, längs geschnittenen Darstellung die Hohlleiteranordnung mit dem Projektil.

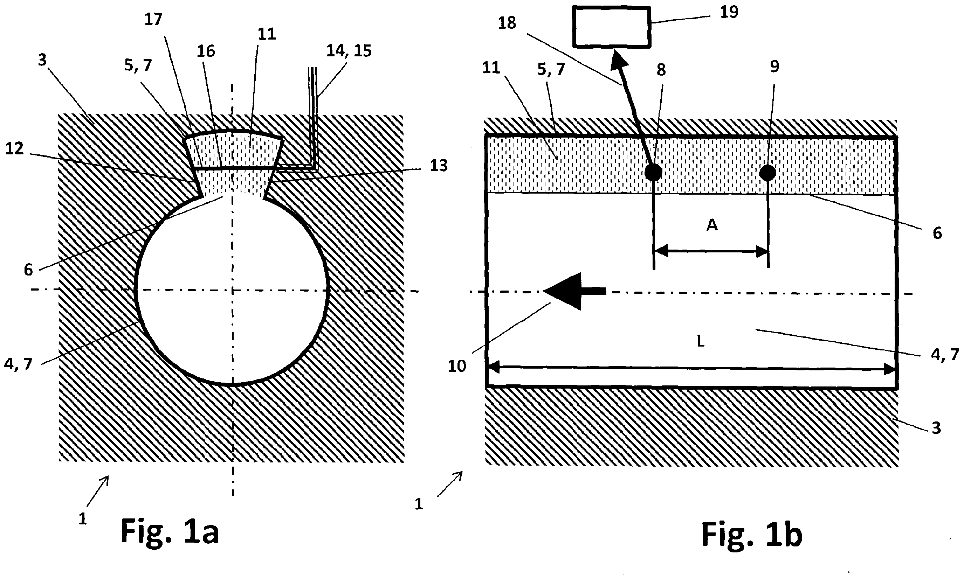

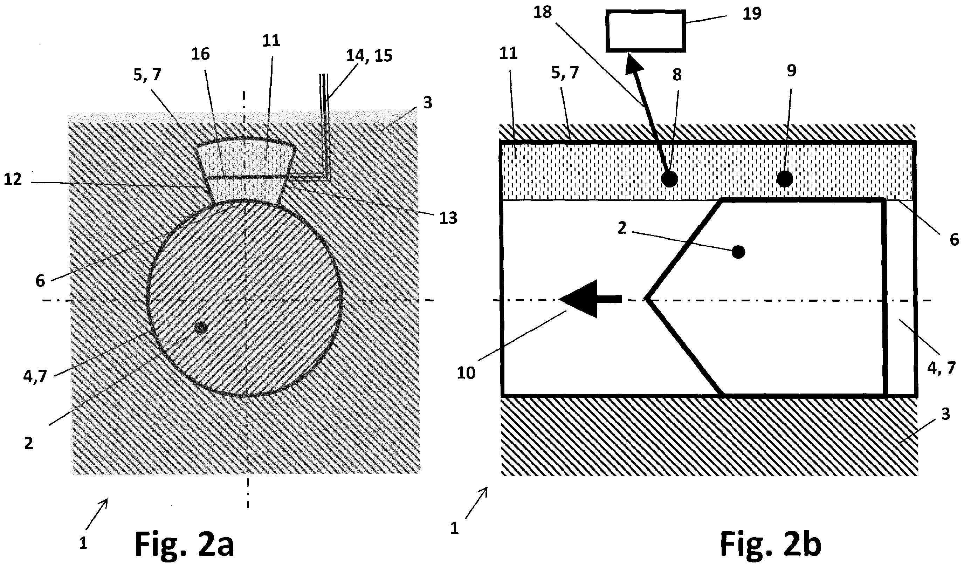

In den Fig. 1a, 1b, 2a und 2b ist eine Hohlleiteranordnung 1 zur Messung der Geschwindigkeit eines Projektils 2 (vgl. Fig. 2a, 2b) zu erkennen.

Die Hohlleiteranordnung 1 ist Teil einer nicht in ihrer Gesamtheit dargestellten Waffenrohranordnung. Die Hohlleiteranordnung 1 bildet eine nicht näher bezeichnete Messsektion. Insbesondere ist die Hohlleiteranordnung 1 an der Mündung eines Waffenrohres angeordnet. Die Hohlleiteranordnung 1 ist insbesondere zwischen der Mündung des Waffenrohres und einer entsprechenden Mündungsbremse angeordnet. Die Hohlleiteranordnung 1 kann Teil der Mündungsbremse sein.

Die Hohlleiteranordnung 1 weist einen Grundkörper 3 auf. Die Hohlleiteranordnung 1 weist einen Haupthohlleiter 4 und einen Nebenhohlleiter 5 auf. Der Haupthohlleiter 4, der Nebenhohlleiter 5 und der Grundkörper 3 bestehen insbesondere aus einem leitenden Material, insbesondere einem Metall. Alternativ ist es denkbar, dass der Grundkörper 3 einen Einsatz aufweist, der den Haupthohlleiter 4 und/oder den Nebenhohlleiter 5 bildet. Der Grundkörper 3 kann insbesondere rohrförmig ausgebildet sein. In den quer geschnittenen Darstellungen in Fig. 1a und 2a ist hier nur ein rechteckiges Detail dargestellt, es ist jedoch denkbar, dass der Grundkörper 3 eine zylindrische Außenumfangsfläche aufweist. Das aus dem Waffenrohr austretende Projektil 2 tritt sodann in den Haupthohlleiter 4 ein, wie es insbesondere in Fig. 2a und Fig. 2b dargestellt ist. Der Haupthohlleiter 4 weist einen im wesentlichen kreisförmigen Querschnitt auf, wobei der Querschnitt an die Größe des abzufeuernden Projektils 2 angepasst ist.

Der Haupthohlleiter 4 weist insbesondere einen Querschnitt von 70 mm oder von mehr als 70 mm auf. Der Haupthohlleiter 4 ist insbesondere zur Messung der Geschwindigkeiten von Artillerieprojektilen mit entsprechenden Großkalibern geeignet. Die Hohlleiteranordnung 1 ist starken Schockeinwirkungen und der Einwirkung von entsprechenden Verbrennungsgasen beim Abfeuern des Projektils 2 ausgesetzt. Daher wird nun ein zum einen robuster und zum anderen kostengünstig herstellbarer Aufbau vorgeschlagen.

Mit dem Haupthohlleiter 4 ist mindestens ein Nebenhohlleiter 5 verbunden. Der Haupthohlleiter 4 ist dabei über eine Öffnung 6 mit dem Nebenhohlleiter 5 verbunden. Der Haupthohlleiter 4 und der Nebenhohlleiter 5 verlaufen parallel zueinander, wie es insbesondere in Fig. 1b zu erkennen ist. Die Öffnung 6 erstreckt sich vorzugsweise über die gesamte Hohlleiterlänge L. Die Öffnung 6 ist hier durch ein sich in Längsrichtung erstreckenden Schlitz gebildet. Durch die Öffnung 6 bildet der Haupthohlleiter 4 und der Nebenhohlleiter 5 einen gemeinsamen Gesamthohlleiter 7. Der Gesamthohlleiter 7 hat hier die Querschnittsform eines Schlüsselloches. Der Gesamthohlleiter 7 bzw. hier der entsprechende Grundkörper 3 weist eine insgesamt gute elektrische Leitfähigkeit auf.

Im Bereich des Nebenhohlleiters 5 sind nun mehrere Koppler 8, 9, nämlich ein Sendekoppler 9 und ein Empfangskoppler 8 angeordnet. Auch wenn mehrere Nebenhohlleiter 5 vorgesehen sind, sind jeweils mindestens ein Sendekoppler 9 und mindestens ein Empfangskoppler 8 zusammen in zumindest einem der Nebenhohlleiter 5 angeordnet. Vorzugsweise ist in jedem der Nebenhohlleiter 5 mindestens ein Paar bestehend aus einem Sendekoppler 9 und einem Empfangskoppler 8 vorgesehen. Es können jedoch auch in dem Nebenhohlleiter 5 bzw. in den Nebenholleitern 5 jeweils mehrere Empfangskoppler 8 und/oder mehrere Sendekoppler 9 angeordnet sein. Der Empfangskoppler 8 und der Sendekoppler 9 sind in einem Abstand A in Längsrichtung gesehen zueinander beabstandet angeordnet. Der Abstand A ist so zu wählen, dass der Signalpegelunterschied in den Fällen mit und ohne Projektil 2 optimal zur Geschwindigkeitsermittlung ist. Die Reihenfolge zwischen dem Sendekoppler 9 und dem Empfangskoppler 8 kann bzgl. der Schussrichtung 10 umgekehrt sein. Ferner kann der Abstand A auch gleich null sein, wobei der Sendekoppler 9 und der Empfangskoppler 8 in Längsrichtung zusammenfallen. Auch ist es möglich, die Anordnung der Koppler 8, 9 entlang der Schussrichtung mehrmals zu wiederholen, um die Genauigkeit und die Robustheit der Geschwindigkeitsmessung zu verbessern.

Der Sendekoppler 9 sendet ein Signal mit einer Frequenz f0, welche unterhalb einer Grenzfrequenz fc des Gesamthohlleiters 7 liegt. Das durch das gesendete Signal der Frequenz f0 erzeugte elektromagnetische Feld breitet sich im Nebenhohlleiter 5 und über die Öffnung 6 auch im Haupthohlleiter 4 aus. In diesem Sinne kommuniziert der Nebenhohlleiter 5 mit dem Haupthohlleiter 4.

Werden mehrere in Schussrichtung 10 nacheinander angeordnete Sendekoppler 9 und Empfangskoppler 8 angeordnet, so kann jedem Sendekoppler 9 eine andere Frequenz f01, f02,.. usw. zugeordnet sein, wobei alle gewählten Frequenzen f0, f01, f02,.. usw. unterhalb der Grenzfrequenz fc des Gesamthohlleiters 7 liegen. Es ist zu beachten, dass die Frequenz f0 oder die Frequenzen f01, f02, ... des Sendesignals bzw. der Sendesignale auch für den Nebenhohlleiter 5 unterhalb dessen Grenzfrequenz fcn zu liegen kommt.

Im Nebenhohlleiter 5 ist ein Isolator 11 aus einem Isolatormaterial angeordnet, wobei der Koppler 8, 9 sich zumindest teilweise in dem Isolator 11 erstreckt. Der Nebenhohlleiter 5 ist vorzugsweise bis zur Öffnung 6 mit dem Isolator 11 gefüllt. Vorzugsweise ist der überwiegende Teil, d. h. mehr als 50%, insbesondere mehr als 75 %, vorzugsweise mehr als 90 %, des Nebenhohlleiters 5 mit dem Isolator 11 gefüllt. Der Isolator 11 hat den Vorteil, dass die beiden Koppler 8, 9 gut vor den entsprechenden Verbrennungsgasen geschützt sind.

In besonders bevorzugter Ausgestaltung ist der Isolator 11 formschlüssig in dem Nebenhohlleiter 5 angeordnet. Der Querschnitt des Nebenhohlleiters 5 weist die Form eines Kreisringsegmentes auf, wobei die Flanken 12, 13 in Umfangsrichtung nach außen gesehen voneinander weiter beabstandet sind als an der Öffnung 6. Die Flanken 12, 13 stehen im wesentlichen konisch zueinander. Die Flanken 12, 13 erstrecken sich vorzugsweise in Radialrichtung und in Längsrichtung. Da sich die Form des Nebenhohlleiters 5 und des Isolators 11 radial zum Zentrum der Hohlleiteranordnung 1 hin verjüngt, ist ein sicherer Halt des Isolators 11 im Nebenhohlleiter 5 gewährleistet und der Isolator 11 kann nicht in den offenen Bereich des Haupthohlleiters 4 gelangen und diesen ganz oder teilweise ausfüllen und so ein Hindurchtreten des Projektils 2 blockieren. Der nicht näher bezeichnete Boden des Nebenhohlleiters 5, zwischen den Flanken 12, 13 kann kreisbogenförmig gewölbt sein oder eben ausgebildet sein, was von dem Herstellungsverfahren des Nebenhohlleiters 5 abhängen kann. Der Isolator 11 liegt vorzugsweise am Boden des Nebenhohlleiters 5 an und ist so abgestützt.

Der Querschnitt des Nebenhohlleiters 5 ist deutlich kleiner als der Querschnitt des Haupthohlleiters 4. Auch wenn mehrere Nebenhohlleiter 5 vorgesehen sind, ist der Gesamtquerschnitt aller Nebenhohlleiter 5 deutlich kleiner als der Querschnitt des Haupthohlleiters 4. Dies hat den Vorteil, dass die Isolatoren 11 entsprechend klein ausgebildet sein können. Insbesondere ist der Isolator 11 aus einem keramischen Werkstoff hergestellt. Es ist die Gefahr verringert, dass es bei der Herstellung der entsprechenden Keramikteile zur vermehrten Bildung von Fehlstellen im Material kommt und so die Festigkeit herabgesetzt werden könnte. Der Einbau des Isolators 11 ist einfach und preisgünstig.

Der Haupthohlleiter 4 führt das Projektil 2. Somit weist der Haupthohlleiter 4 die Innenquerabmessung des Projektils 2 auf. Dies ist die bevorzugte Maßnahme, die Querabmessung des Haupthohlleiters 4 möglichst klein zu halten und diese Maßnahme hilft, die Einbaugröße der Hohlleiteranordnung 1 zu minimieren. Der Nebenhohlleiter 5 verläuft parallel zum Haupthohlleiter 4. Die Querabmessung des Nebenhohlleiters 5 kann in gewissem Maße frei gewählt werden, sollte aber bevorzugt viel kleiner als jene des Haupthohlleiters 4 sein, um die Einbaugröße der entsprechenden Messsektion bzw. der Hohlleiteranordnung 1 nicht unnötig zu vergrößern. Der Nebenhohlleiter 5 kann unterschiedliche Querschnittsformen aufweisen, bspw. kreissegmentförmig wie es dargestellt ist. Alternativ kann der Nebenhohlleiter 5 andere Querschnittsformen aufweisen, beispielsweise polygonal, dreieckig, rechteckig, quadratisch, kreisförmig, oval oder dgl., wobei der Nebenhohlleiter 5 über eine entsprechende Öffnung 6 mit dem Haupthohlleiter 4 verbunden ist.

Im Folgenden darf eine bevorzugte Ausgestaltung der beiden Koppler 8, 9, nämlich des Empfangskopplers 8 und des Sendekopplers 9, näher beschrieben werden. Jeder dieser beiden Koppler 8, 9 weist einen Koaxialleiter 14 auf. Der Koaxialleiter 14 wird von außen an den Nebenhohlleiter 5 angeschlossen. Der Koaxialleiter 14 weist einen Außenleiter 15 auf, wobei der Außenleiter 15 entsprechend von außen an dem Nebenhohlleiter 5 angeschlossen wird. Der Koaxialleiter 14 weist ferner einen Innenleiter 16 auf. Der Innenleiter 16 erstreckt sich bis in eine Aufnahme 17 im Isolator 11. Der Isolator 11 weist jeweils eine Aufnahme 17 für jeden Empfangskoppler 8 bzw. Sendekoppler 9 auf. Die Aufnahme 17 ist in besonders bevorzugter Ausgestaltung als Bohrung ausgebildet. Die Bohrung bzw. Aufnahme 17 erstreckt sich quer zur Längsrichtung der Hohlleiteranordnung 1. Der Außenleiter 15 ist insbesondere leitend mit der Hohlleiterwand 13 verbunden. Das freie Ende des Innenleiters 16 ist leitend mit der gegenüberliegenden Hohlleiterwand 12 verbunden . Durch diese Ausgestaltung ergibt sich ein Kurzschluss zwischen dem Außenleiter 15 und dem Innenleiter 16, da diese über die leitenden Hohlleiterwände 12, 13 bzw. über den leitenden Nebenhohlleiter 5 miteinander verbunden sind. Dennoch kann diese Anordnung zur Messung eines zeitlich veränderlichen Feldes im Nebenhohlleiter 5 verwendet werden, da der Außenleiter 15, der Innenleiter 16 und der Nebenhohlleiter 5 eine Art Spule bilden, die von dem entsprechenden Feld durchsetzt ist. Die induzierte Signaländerung ergibt sich durch die Beschreibung der Maxwell-Gleichungen.

In nicht erfindungsgemäßen Ausgestaltung ist der Innenleiter 16 nicht mit der gegenüberliegenden Hohlleiterwand 12 verbunden, sondern er endet beabstandet von der Hohlleiterwand 12. Hierdurch ergibt sich zwischen dem Innenleiter 16 und der Hohlleiterwand 12 ein kapazitiver Widerstand. Der Zwischenraum zwischen dem Ende des Innenleiters 16 und der Hohlleiterwand 12 ist insbesondere mit dem Isolatormaterial bzw. dem Isolator 11 gefüllt.

Der Sendekoppler 9 ist beabstandet zu einer Mündung der Waffenrohranordnung angeordnet, um ein Austritt des erzeugten Signales aus der Waffenrohranordnung zu verhindern. Die Hohlleiterlänge L ist so gewählt, dass an den beiden Enden praktisch kein elektromagnetisches Feld messbar ist. Mit dieser Maßnahme strahlt einerseits die Hohlleiteranordnung 1 nicht messbar Energie ab und ist andererseits robust gegenüber äußeren Störsignalen mit Frequenzen unterhalb der Hohlleiterfrequenz fc.

Von dem Empfangskoppler 8 wird nun ein Empfangssignal 18 an einen Filter 19 gesendet. Mit dem Filter 19 sind Signalanteile filterbar, die oberhalb der Grenzfrequenz des Gesamthohlleiters 7 und/oder des Nebenhohlleiters 5 liegen Der Filter 19 dient dazu, äußere Störsignale mit Frequenzen zu blocken, die auf gleicher Höhe oder oberhalb der Hohlleiterfrequenz fc im Empfangssignal 18 liegen.

Im Folgenden darf auf Fig. 2a und 2b näher eingegangen werden. Wie gut ersichtlich ist, füllt der Querschnitt des Projektils 2 den Querschnitt des Haupthohlleiters 4 aus. Dies kann erreicht werden, wenn der Innendurchmesser des Haupthohlleiters 4 gleich groß oder etwas größer als der Außendurchmesser des Führungsbandes des Geschosses bzw. des Projektils 2 ist. Die Öffnung 6 wird nun durch die Außenhülle des Projektils 2 teilweise oder ganz geschlossen. Das bestehende elektromagnetische Feld erfährt somit eine zeitlich ändernde Randbedingung über die Öffnung 6. Die zeitlich ändernde Randbedingung über der Öffnung 6 führt dazu, dass sich die elektromagnetische Feldverteilung im Nebenhohlleiter 5 zeitlich ändert. Diese zeitliche Feldveränderung wird durch den Empfangskoppler 8 empfangen und das Empfangssignal 18 wird zur Geschwindigkeitsbestimmung weitergeleitet. Das Empfangssignal 18 hat einen charakteristischen zeitlichen Verlauf, wenn das Projektil 2 in Schussrichtung 10 durch den Haupthohlleiter 5 hindurchtritt. Dieser zeitliche Verlauf erlaubt es, die Geschwindigkeit zu bestimmen.

Durch die vorgeschlagene Hohlleiteranordnung 1 ergeben sich mehrere Vorteile. Nur wenn der Nebenhohlleiter 5 mit dem Isolator 11 gefüllt ist und der Haupthohlleiter 4 in der Querabmessung größer als die Querabmessung des Nebenhohlleiters 5 ist, können die Abmessungen des Isolators 11 klein gehalten werden. Der Innendurchmesser des Haupthohlleiters 4 entspricht dem Außendurchmesser des Projektils 2 und der Innendurchmesser des Haupthohlleiters 4 ist somit minimal. Die Querabmessungen des Nebenhohlleiters 5 sind klein zu wählen, um die gesamte Einbaugröße der Hohlleiteranordnung 1 bzw. der entsprechenden Messsektion zu minimieren. Hierdurch können die geforderten Einbaudimensionen ohne Weiteres eingehalten werden.

Die Fertigung und Handhabung von großen Isolatorbauteilen ist vermieden, wodurch die Herstellkosten der Messsektion gesenkt sind. Da nur der Nebenhohlleiter 5 mit dem Isolator 11 ausgefüllt ist, ist die Menge an Isolatormaterial minimal. Dies reduziert die Kosten. Die Herstellung, insbesondere von Keramikteilen als Isolatoren 11 in diesen Größen kann zur vermehrten Bildung von Fehlstellen im Material führen und die Festigkeit herabsetzen. Da hier jedoch nur der Nebenhohlleiter 5 mit dem Keramikmaterial ausgefüllt ist, ist die Menge an Isolatormaterial klein, die entsprechende Abmessungen sind klein und die Bildung von Fehlstellen kann vermindert werden. Der Einbau der Koppler 8, 9, insbesondere des Empfangskopplers 8 oder des Sendekopplers 9 ist einfach und kostengünstig. Die Konstruktion des Sendekopplers 9 und/oder des Empfangskopplers 8 besteht im wesentlichen nur aus dem Innenleiter 16 eines entsprechenden Koaxialkabels, welches von außen in einer vorgesehenen Bohrung in den Isolator 11 geführt ist. Das Koaxialkabel wird mit seinem Außenleiter 15 von außen an den Nebenhohlleiter 5 angeschlossen. Dies ist ein einfacher und kostengünstiger Aufbau, wobei die Störfestigkeit erhöht ist. Die Hauptanwendung der hier vorgeschlagenen Hohlleiteranordnung 1 ergibt sich als Messeinrichtung der Mündungsgeschwindigkeit, bei denen keine Programmierung des Projektils 2 gefordert ist, z. B. bei großkalibriger Artilleriemunition und/oder Haubitzen. Es ist jedoch auch denkbar, dass mit der Hohlleiteranordnung 1 eine Programmierung des Projektils 2 vorgenommen wird.

Es ist jedoch denkbar, dass eine solche Hohlleiteranordnung 1 ebenfalls beispielsweise für Mittelkalibergeschütze mit 30 mm oder 35 mm angewendet wird. Insbesondere kann die Hohlleiteranordnung 1 zur Mündungsgeschwindigkeitsmessung im Großkaliberbereich, insbesondere zur Messung der Mündungsgeschwindigkeit von Projektilen 2 mit einem Kaliber von 155 mm genutzt werden.

### BEZUGSZEICHENLISTE

- 1: Hohlleiteranordnung
- 2: Projektil
- 3: Grundkörper
- 4: Haupthohlleiter
- 5: Nebenhohlleiter
- 6: Öffnung
- 7: Gesamthohlleiter
- 8: Empfangskoppler
- 9: Sendekoppler
- 10: Schussrichtung
- 11: Isolator
- 12: Hohlleiterwand
- 13: Hohlleiterwand
- 14: Koaxialleiter
- 15: Außenleiter
- 16: Innenleiter
- 17: Aufnahme
- 18: Empfangssignal
- 19: Filter

- L: Hohlleiterlänge
- A: Abstand

## Patentansprüche

1. Hohlleiteranordnung (1) zur Messung der Geschwindigkeit eines Projektils (2) während des Durchlaufs einer Waffenrohranordnung, wobei ein Haupthohlleiter (4) und mindestens ein Nebenhohlleiter (5) vorgesehen sind, wobei der Haupthohlleiter (4) einen für den Durchlauf des Projektils (2) geeigneten Querschnitt aufweist, wobei der Nebenhohlleiter (5) sich benachbart zum Haupthohlleiter (4) erstreckt und mit dem Haupthohlleiter (4) über eine Öffnung (6) verbunden ist, wobei in dem Nebenhohlleiter (5) mindestens ein Koppler (8, 9) angeordnet ist, wobei mittels eines Sendekopplers (9) ein Signal erzeugbar ist, wobei die Frequenz des Signals unterhalb der Grenzfrequenz des Nebenhohlleiters (5) und unterhalb der Grenzfrequenz des aus dem Haupthohlleiter (4) und dem Nebenhohlleiter (5) bestehenden Gesamthohlleiters (7) liegt, wobei die Geschwindigkeit des im Haupthohlleiter (4) befindlichen Projektils (2) mit einer Frequenz unterhalb der Grenzfrequenz messbar ist, wobei der Sendekoppler (9) beabstandet zu einer Mündung der Waffenrohranordnung angeordnet ist, um einen Austritt des erzeugten Signales aus der Waffenrohranordnung zu verhindern, **dadurch gekennzeichnet, dass** im Nebenhohlleiter (5) ein aus einem Isolatormaterial gefertigter Isolator (11) angeordnet ist, wobei der mindestens eine Koppler (8, 9) sich zumindest teilweise in dem Isolator (11) erstreckt, wobei der Koppler (8, 9) als ein Koaxialleiter (14) mit einem Innenleiter (16) und einem Außenleiter (15) ausgebildet ist, wobei der Außenleiter (15) mit dem Nebenhohlleiter (5) leitend verbunden ist, wobei der Außenleiter (15) von außen an den Nebenhohlleiter (5) angeschlossen ist, wobei der Innenleiter sich in einer Aufnahme (17) im Isolator (11) erstreckt, wobei die Aufnahme sich quer zur Längsrichtung der Hohlleiteranordnung (1) erstreckt, wobei der Außenleiter (15) leitend mit einer Hohlleiterwand (13) verbunden ist, wobei ein freies Ende des Innenleiters (16) leitend mit einer gegenüberliegenden Hohlleiterwand (12) verbunden ist, und wobei über die leitenden Hohlleiterwände (12, 13) bzw. über den leitenden Nebenhohlleiter (5) ein Kurzschluss zwischen dem Außenleiter (15) und dem Innenleiter (16) hergestellt ist.

2. Hohlleiteranordnung nach Anspruch 1, **dadurch gekennzeichnet, dass** der Isolator (11) formschlüssig im Nebenhohlleiter (5) angeordnet ist.

3. Hohlleiteranordnung nach Anspruch 1 oder 2, **dadurch gekennzeichnet, dass** der Isolator (11) einen keramischen Werkstoff aufweist.

4. Hohlleiteranordnung nach einem der vorstehenden Ansprüche, **dadurch gekennzeichnet, dass** der Haupthohlleiter (4) einen kreisförmigen Querschnitt mit einem Durchmesser von 70 mm oder von mehr als 70 mm aufweist.

5. Hohlleiteranordnung nach dem vorstehenden Anspruch, **dadurch gekennzeichnet, dass** der Durchmesser mehr als 150 mm beträgt.

6. Hohlleiteranordnung nach einem der vorstehenden Ansprüche, **dadurch gekennzeichnet, dass** weniger als drei Nebenhohlleiter (5) vorgesehen sind.

7. Hohlleiteranordnung nach einem der vorstehenden Ansprüche, **dadurch gekennzeichnet, dass** genau ein Nebenhohlleiter (5) vorgesehen ist.

8. Hohlleiteranordnung nach einem der vorstehenden Ansprüche, **dadurch gekennzeichnet, dass** mindestens einem der Nebenhohlleiter (5) mindestens ein Sendekoppler (9) und mindestens ein Empfangskoppler (8) zugeordnet ist.

9. Hohlleiteranordnung nach einem der vorstehenden Ansprüche, **dadurch gekennzeichnet, dass** mittels des Empfangskopplers (8) ein Empfangssignal (18) einem Filter (19) zuleitbar ist, wobei mit dem Filter (19) Signalanteile filterbar sind, die oberhalb der Grenzfrequenz des Gesamthohlleiters (7) und/oder des Nebenhohlleiters (5) liegen.

## Claims

1. Waveguide arrangement (1) for measuring the speed of a projectile (2) during passage through a weapon barrel arrangement, wherein a main waveguide (4) and at least one auxiliary waveguide (5) are provided, wherein the main waveguide (4) has a cross section suitable for the passage of the projectile (2), wherein the auxiliary waveguide (5) extends alongside the main waveguide (4) and is connected to the main waveguide (4) by way of an opening (6), wherein at least one coupler (8, 9) is arranged in the auxiliary waveguide (5), wherein a signal can be generated by means of a transmitting coupler (9), wherein the frequency of the signal lies below the cut-off frequency of the auxiliary waveguide (5) and below the cut-off frequency of the complete waveguide (7) consisting of the main waveguide (4) and the auxiliary waveguide (5), wherein the speed of the projectile (2) located in the main waveguide (4) can be measured at a frequency below the cut-off frequency, wherein the transmitting coupler (9) is arranged at a distance from a muzzle of the weapon barrel arrangement, in order to prevent the signal generated from leaving the weapon barrel arrangement, **characterized in that** an isolator (11) that is produced from an isolator material is arranged in the auxiliary waveguide (5), wherein the at least one coupler (8, 9) extends at least partially in the isolator (11), wherein the coupler (8, 9) is formed as a coaxial conductor (14) with an inner conductor (16) and an outer conductor (15), wherein the outer conductor (15) is connected in a conducting manner to the auxiliary waveguide (5), wherein the outer conductor (15) is connected to the auxiliary waveguide (5) from the outside, wherein the inner conductor extends in a receptacle (17) in the isolator (11), wherein the receptacle extends transversely in relation to the longitudinal direction of the waveguide arrangement (1), wherein the outer conductor (15) is connected in a conducting manner to the waveguide wall (13), wherein a free end of the inner conductor (16) is connected in a conducting manner to an opposite waveguide wall (12) and wherein a short circuit between the outer conductor (15) and the inner conductor (16) is produced by way of the conducting waveguide walls (12, 13) or by way of the conducting auxiliary waveguide (5).

2. Waveguide arrangement according to Claim 1, **characterized in that** the isolator (11) is arranged in the auxiliary waveguide (5) in a form-fitting manner.

3. Waveguide arrangement according to Claim 1 or 2, **characterized in that** the isolator (11) comprises a ceramic material.

4. Waveguide arrangement according to one of the preceding claims, **characterized in that** the main waveguide (4) has a circular cross section with a diameter of 70 mm or of more than 70 mm.

5. Waveguide arrangement according to the preceding claim, **characterized in that** the diameter is more than 150 mm.

6. Waveguide arrangement according to one of the preceding claims, **characterized in that** fewer than three auxiliary waveguides (5) are provided.

7. Waveguide arrangement according to one of the preceding claims, **characterized in that** just one auxiliary waveguide (5) is provided.

8. Waveguide arrangement according to one of the preceding claims, **characterized in that** at least one of the auxiliary waveguides (5) is assigned at least one transmitting coupler (9) and at least one receiving coupler (8).

9. Waveguide arrangement according to one of the preceding claims, **characterized in that** a received signal (18) can be fed to a filter (19) by means of the receiving coupler (8), wherein, with the filter (19), signal components that lie above the cut-off frequency of the complete waveguide (7) and/or of the auxiliary waveguide (5) can be filtered.

## Revendications

1. Ensemble de guides creux (1) pour mesurer la vitesse d'un projectile (2) pendant le passage à travers un ensemble formant canon, dans lequel il est prévu un guide creux principal (4) et au moins un guide creux secondaire (5), dans lequel le guide creux principal (4) a une section transversale appropriée au passage du projectile (2), dans lequel le guide creux secondaire (5) s'étend de manière adjacente au guide creux principal (4) et est relié au guide creux principal (4) par un orifice (6), dans lequel au moins un coupleur (8, 9) est disposé dans le guide creux secondaire (5), dans lequel un signal peut être généré au moyen d'un coupleur d'émission (9), dans lequel la fréquence du signal est inférieure à la fréquence de coupure du guide creux secondaire (5) et inférieure à la fréquence de coupure du guide creux global (7) constitué du guide creux principal (4) et du guide creux secondaire (5), dans lequel la vitesse du projectile (2) se trouvant dans le guide creux principal (4) peut être mesurée à une fréquence inférieure à la fréquence de coupure, dans lequel le coupleur d'émission (9) est disposé de manière espacée d'une embouchure de l'ensemble formant canon pour éviter que le signal généré ne sorte de l'ensemble formant canon,
**caractérisé en ce qu'**un isolateur (11) fait d'un matériau isolant est disposé dans le guide creux secondaire (5), dans lequel ledit au moins un coupleur (8, 9) s'étend au moins en partie dans l'isolateur (11), dans lequel le coupleur (8, 9) est réalisé sous la forme d'un conducteur coaxial (14) comportant un conducteur interne (16) et un conducteur externe (15), dans lequel le conducteur externe (15) est relié de manière conductrice au guide creux secondaire (5), dans lequel le conducteur externe (15) est raccordé au guide creux secondaire (5) depuis l'extérieur, dans lequel le conducteur interne s'étend dans un réceptacle (17) dans l'isolateur (11), dans lequel le réceptacle s'étend transversalement à la direction longitudinale de l'ensemble de guides creux (1), dans lequel le conducteur externe (15) est relié de manière conductrice à une paroi de guide creux (13), dans lequel une extrémité libre du conducteur interne (16) est reliée de manière conductrice à une paroi de guide creux opposée (12), et dans lequel un court-circuit est produit entre le conducteur externe (15) et le conducteur interne (16) par l'intermédiaire des parois de guide creux (12, 13) conductrices ou par l'intermédiaire du guide creux secondaire (5) conducteur.

2. Ensemble de guides creux selon la revendication 1, **caractérisé en ce que** l'isolateur (11) est disposé par complémentarité de forme dans le guide creux secondaire (5) .

3. Ensemble de guides creux selon la revendication 1 ou 2, **caractérisé en ce que** l'isolateur (11) comprend un matériau céramique.

4. Ensemble de guides creux selon l'une des revendications précédentes, **caractérisé en ce que** le guide creux principal (4) a une section transversale circulaire avec un diamètre de 70 mm ou de plus de 70 mm.

5. Ensemble de guides creux selon la revendication précédente, **caractérisé en ce que** le diamètre est supérieur à 150 mm.

6. Ensemble de guides creux selon l'une des revendications précédentes, **caractérisé en ce qu'**il est prévu moins de trois guides creux secondaires (5).

7. Ensemble de guides creux selon l'une des revendications précédentes, **caractérisé en ce qu'**il est prévu exactement un guide creux secondaire (5).

8. Ensemble de guides creux selon l'une des revendications précédentes, **caractérisé en ce qu'**au moins un coupleur d'émission (9) et au moins un coupleur de réception (8) sont associés à au moins l'un des guides creux secondaires (5).

9. Ensemble de guides creux selon l'une des revendications précédentes, **caractérisé en ce qu'**un signal reçu (18) peut être envoyé à un filtre (19) au moyen du coupleur de réception (8), dans lequel des composantes de signal qui se situent au-dessus de la fréquence de coupure du guide creux global (7) et/ou du guide creux secondaire (5) peuvent être filtrées au moyen du filtre (19).
